# EUROPEAN PATENT SPECIFICATION

(11) **EP 4 123 233 B1**
(45) Date of publication and mention of the grant of the patent: **28.08.2024**
(21) Application number: 21425035.9
(22) Date of filing: 23.07.2021
(51) Int. Cl.: F24F 3/00, F24F 11/72, F24F 1/00, F24F 13/10

(54) **AIR-CONDITIONING APPARATUS**
KLIMATISIERUNGSVORRICHTUNG
APPAREIL DE CLIMATISATION

(43) Date of publication of application: 25.01.2023
(73) Proprietor: Mitsubishi Electric Corporation, Tokyo 100-8310 (JP); Mitsubishi Electric Hydronics & IT Cooling Systems S.p.A., 36061 Bassano del Grappa (Vicenza) (IT)
(72) Inventor: Kawashima, Mitsuru, Tokyo 1008310 (JP); Okajima, Jiro, Tokyo 1008310 (JP); Marchetto, Federico, 36061 Bassano del Grappa (VI) (IT)
(74) Representative: Studio Torta S.p.A.

(56) References cited:
- WO-A1-2021/050617
- US-A1- 2015 096 714
- US-A1- 2019 170 604

## Description

### TECHNICAL FIELD

The present invention relates to an air-conditioning apparatus that supplies air to a room through a duct.

### BACKGROUND ART

For a conventional air-conditioning apparatus, there is an air-conditioning apparatus that includes a main duct, an indoor unit, an air conditioning duct, and an outflow duct, the main duct being disposed in a ceiling or the like, the indoor unit being installed at an intermediate portion of the main duct to divide the main duct into a suction side and a blowing side, the air conditioning duct supplying conditioned air generated in the indoor unit by an air-sending device to the room from the main duct on the suction side, the outflow duct causing air of the room to flow out to the main duct on the suction side (see International Publication No. WO 2019/097604 A1, and US Publication No. US 2015/096714 A1 for example).

The air-conditioning apparatus disclosed in US 2015/096714 A1 further includes an air supply damper which can be opened or closed in order to allow or prevent communication between the room and the indoor unit; and a control module which controls the opening and closing of the damper in accordance with the operational status of the air-sending device.

The air-conditioning apparatus disclosed in WO 2019/097604 A1 further includes an exhaust duct and an exhaust fan, the exhaust duct making the main duct on the suction side and the outside communicate with each other, the exhaust fan being disposed in the exhaust duct. In the air-conditioning apparatus disclosed in WO 2019/097604 A1, a leakage detection sensor is disposed in the main duct on the suction side to detect leakage of flammable refrigerant. When the leakage detection sensor detects leakage of refrigerant, an operation is performed in which the exhaust fan is driven to discharge leaked refrigerant to the outside from the main duct on the suction side via the exhaust duct.

### SUMMARY OF INVENTION

### TECHNICAL PROBLEM

However, in WO 2019/097604 A1, when the air-conditioning apparatus is in a stopped state, that is, when the exhaust fan is in a stopped state, leaked refrigerant cannot be exhausted to the outside, and the leaked refrigerant stagnates in the indoor unit. The outflow duct always communicates with the room and hence, the air-conditioning apparatus disclosed in WO 2019/097604 A1 has a problem that leaked refrigerant stagnating in the indoor unit may flow into the room from the main duct on the suction side via the outflow duct, thus forming a flammable region in the room.

Although US 2015/096714 A1 discloses the features of the preamble of claims 1 and 10, it does not address the problem of refrigerant leaking. The present invention has been made to solve such a problem, and it is an object of the present disclosure to provide an air-conditioning apparatus that supplies air to the room through a duct, and that can suppress formation of a flammable region in the room even when the air-conditioning apparatus is in a stopped state.

### SOLUTION TO PROBLEM

The aforementioned problem is solved thanks to an air conditioning apparatus according to the independent claims 1 and 10. The dependent claims provide preferred embodiments of the invention.

### ADVANTAGEOUS EFFECTS OF INVENTION

According to the claimed air conditioning apparatus, in the air-conditioning apparatus that supplies conditioned air to the room through the air supply duct by operating the air-sending device, the air supply damper is closed during the stop of the air-sending device and hence, it is possible to suppress formation of a flammable region in the room when the air-conditioning apparatus is in a stopped state.

### BRIEF DESCRIPTION OF DRAWINGS

Fig. 1 is a schematic view showing the overall configuration of an air-conditioning apparatus according to Embodiment 1, not making part of the present invention.
Fig. 2 is a schematic view showing a modification of the air-conditioning apparatus according to Embodiment 1.
Fig. 3 is a schematic view showing the overall configuration of an air-conditioning apparatus according to Embodiment 2, according to the present invention.
Fig. 4 is a schematic view showing the overall configuration of an air-conditioning apparatus according to Embodiment 3, according to the present invention.
Fig. 5 is a schematic view showing a modification of the air-conditioning apparatus according to Embodiment 3.

### DESCRIPTION OF EMBODIMENTS

Hereinafter, modes for carrying out the present invention will be described with reference to attached drawings. In the respective drawings, identical or corresponding components are given the same reference symbols, and the repeated description will be simplified or omitted when appropriate.

### Embodiment 1.

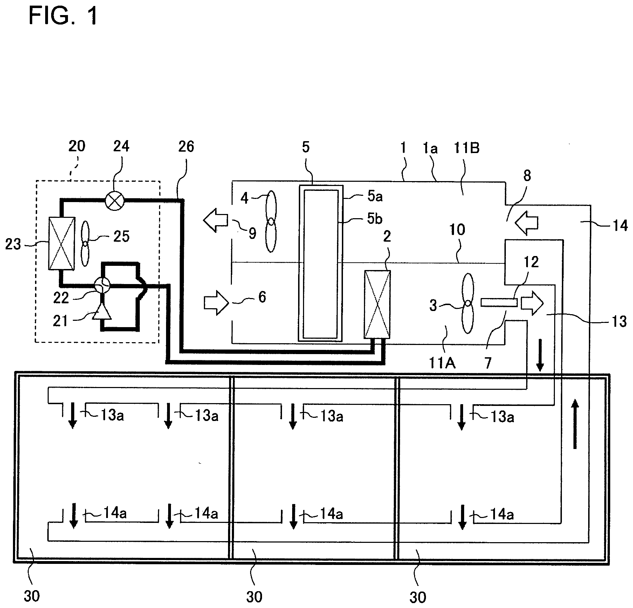

Fig. 1 is a schematic view showing the overall configuration of an air-conditioning apparatus according to Embodiment 1, not making part of the present invention, but useful for its understanding.

As shown in Fig. 1, the air-conditioning apparatus includes a fan unit 1 and an outdoor unit 20 that are installed outside. The fan unit 1 includes an air-sending device 3 therein, and supplies conditioned air (hereinafter referred to as "supply air") to air-conditioned rooms 30 through an air supply duct 13, which will be described later, by operating the air-sending device 3. In the air-conditioning apparatus, conditioned air is supplied to the rooms 30 by distributing the conditioned air via the air supply duct 13 and hence, the conditioned air can be supplied to the plurality of rooms 30 by one fan unit 1. Conditioned air indicates air conditioned to a certain temperature by an indoor heat exchanger 2 during an air conditioning and ventilation operation, which will be described later, or outside air taken into the fan unit 1 from the outside in a ventilation operation, which will be described later.

The fan unit 1 includes a housing 1a having a cuboid shape, and the indoor heat exchanger 2, the air-sending device 3, an air return device 4, and a total heat exchanger 5 are disposed in the housing 1a. The housing 1a has an outside air port 6, an air supply port 7, a return air port 8, and an exhaust port 9 that are formed in a penetrating manner, the outside air port 6 taking air into the housing 1a from the outside, the air supply port 7 supplying the outside air taken into the housing 1a from the outside air port 6 to the rooms 30, the return air port 8 taking air into the housing 1a from the rooms 30, the exhaust port 9 exhausting the air taken into the housing 1a from the return air port 8 to the outside. A partition wall 10 is disposed in the housing 1a to extend in the horizontal direction. Due to the partition wall 10, the inside of the housing 1a is divided in a vertical direction to form an outside air passage 11A and an exhaust air passage 11B. The outside air passage 11A is formed in the lower portion of the housing 1a, and the exhaust air passage 11B is formed in the upper portion of the housing 1a. The air-conditioning apparatus is not limited to the configuration where the inside of the housing 1a is divided in the vertical direction, and may have a configuration where the inside of the housing 1a is divided in a lateral direction.

The outside air passage 11A is an air passage that makes the outside air port 6 and the air supply port 7 communicate with each other, and that supplies outside air taken into the housing 1a from the outside air port 6 to the rooms 30 from the air supply port 7. The exhaust air passage 11B is an air passage that makes the return air port 8 and the exhaust port 9 communicate with each other, and that exhausts air of the rooms 30 taken into the housing 1a from the return air port 8 to the outside from the exhaust port 9. Outline arrows in Fig. 1 indicate the flow of air in the outside air passage 11A and the exhaust air passage 11B.

The indoor heat exchanger 2 and the air-sending device 3 are disposed in the outside air passage 11A in that order from the upwind side. The air return device 4 is disposed in the exhaust air passage 11B. The total heat exchanger 5 is also disposed in the housing 1a in a shared manner with the outside air passage 11A and the exhaust air passage 11B such that the total heat exchanger 5 is disposed in an intermediate portion of the outside air passage 11A and in an intermediate portion of the exhaust air passage 11B. The total heat exchanger 5 is disposed on the upwind side of the indoor heat exchanger 2 in the outside air passage 11A, and is disposed on the upwind side of the air return device 4 in the exhaust air passage 11B. During the operation of the air-conditioning apparatus, the air-sending device 3 is driven to generate an air flow directed toward the rooms 30 from the outside air port 6 via the air supply port 7 and the air supply duct 13, which will be described later. During the operation of the air-conditioning apparatus, the air return device 4 is driven to generate an air flow directed toward the exhaust port 9 from the rooms 30 via a return air duct 14, which will be described later, and the return air port 8.

The total heat exchanger 5 performs heat exchange between outside air taken into the housing 1a from the outside air port 6 and air of the rooms 30 taken into the housing 1a from the return air port 8. The total heat exchanger 5 is a device that performs heat exchange between outside air passing through the outside air passage 11A and exhaust air passing through the exhaust air passage 11B to recover energy of air conditioning that is lost due to ventilation with outside air. The total heat exchanger 5 is a rotary total heat exchanger having a configuration where a casing 5a is divided into an outside air side and an exhaust air side and a honeycomb rotor 5b is disposed in the casing 5a, the total heat exchanger 5 performing heat exchange by rotating the honeycomb rotor 5b. The total heat exchanger 5 is not limited to a rotary total heat exchanger, and may be a static total heat exchanger where an outside air flow passage and an exhaust air flow passage are partitioned by a planar sheet to form independent flow passages, and heat exchange is performed between outside air and exhaust air.

The air supply duct 13 and the return air duct 14 are connected to the fan unit 1. The air supply duct 13 supplies air that passes through the outside air passage 11A to the respective rooms 30. The return air duct 14 causes air of the respective rooms 30 to be refluxed to the return air port 8. The air supply duct 13 makes the air supply port 7 and the respective rooms 30 communicate with each other. To be more specific, the air supply duct 13 extends from the air supply port 7 toward the respective rooms 30, and blows air toward the rooms 30 from air outlets 13a respectively provided to the rooms 30. The return air duct 14 extends from the return air port 8 toward the respective rooms 30, and suctions air of the rooms 30 from air inlets 14a respectively provided to the rooms 30 to return the air to the return air port 8. The air outlets 13a are located on the ceiling side of the rooms 30, and the air inlets 14a are located on the floor surface side of the rooms 30. As shown by solid line arrows in Fig. 1, the flows of air from the ceiling side toward the floor surface side are formed in the rooms 30.

In the fan unit 1, the air supply port 7 is provided with an air supply damper 12 that opens and closes the air supply port 7. By closing the air supply damper 12, it is possible to shut off air flowing from the air-sending device 3 into the air supply duct 13. The air supply damper 12 is open during the operation of the air-conditioning apparatus, and is closed during the stop of the operation of the air-conditioning apparatus. Opening and closing control of the air supply damper 12 is performed by a controller not shown in the drawing.

The configuration of the fan unit 1 is not limited to the configuration where the air supply damper 12 is provided to the air supply port 7, and may be a configuration where the air supply damper 12 is provided to each air outlet 13a. Also in the case of the configuration where the air supply damper 12 is provided to each air outlet 13a, each air supply damper 12 is operated in the same manner as the case where the air supply damper 12 is provided to the air supply port 7. That is, each air supply damper 12 is open during the operation of the air-conditioning apparatus, and is closed during the stop of the air-conditioning apparatus. A position where the fan unit 1 is installed is not limited to the outside. The fan unit 1 may be installed in the room 30 provided that extension ducts are connected to the outside air port 6 and the exhaust port 9 and the end portions of the ducts are introduced to the outside for taking outside air into the fan unit 1 and for exhausting exhaust air to the outside.

The outdoor unit 20 includes a compressor 21, a four-way valve 22, an outdoor heat exchanger 23, a pressure reducing device 24, and an outdoor air-sending device 25. The compressor 21 is equipment that compresses refrigerant to increase pressure and temperature of the refrigerant. For the compressor 21, a rotary compressor or a scroll compressor may be used, for example. The pressure reducing device 24 is a device that causes refrigerant to expand to reduce the pressure of the refrigerant. The pressure reducing device 24 may be an electronic expansion valve (LEV), for example.

In the air-conditioning apparatus, the compressor 21, the four-way valve 22, the outdoor heat exchanger 23, and the pressure reducing device 24 are installed in the outdoor unit 20, the indoor heat exchanger 2 is installed in the fan unit 1, and a refrigerant circuit through which refrigerant cycles is formed by connecting these components via refrigerant pipes 26. A specific pipe configuration is as follows. The refrigerant pipe 26 extending to the outside of the outdoor unit 20 from the outdoor unit 20 and the refrigerant pipe 26 extending to the outside of the fan unit 1 from the fan unit 1 are connected with each other via a metal connection portion (not shown in the drawing), such as a joint, to form the refrigerant circuit.

The air-conditioning apparatus selectively performs the air conditioning and ventilation operation or the ventilation operation. In the air conditioning and ventilation operation, ventilation is performed while a refrigeration cycle action is performed by causing refrigerant to cycle through the refrigerant circuit to perform air conditioning. In the ventilation operation, only ventilation is performed without performing the refrigeration cycle action. In the air conditioning and ventilation operation, the compressor 21 and the outdoor air-sending device 25 are operated, and the air-sending device 3 is operated. In the air conditioning and ventilation operation, the air-conditioning apparatus can switch a cooling operation and a heating operation by switching the four-way valve 22 to reverse a direction in which refrigerant cycles in the refrigerant circuit.

In the ventilation operation, the compressor 21 and the outdoor air-sending device 25 are stopped, and the air-sending device 3 is operated. These operations of the air-conditioning apparatus can be controlled by a remote control or the like in the room 30. Hereinafter, "during the operation of the air-conditioning apparatus" indicates that the air-conditioning apparatus performs the air conditioning and ventilation operation or the ventilation operation, so that at least the air-sending device 3 is operated. Further, "during the stop of the air-conditioning apparatus" indicates that the air conditioning and ventilation operation or the ventilation operation of the air-conditioning apparatus is stopped, so that the compressor 21, the outdoor air-sending device 25, the air-sending device 3, and the air return device 4 are in a stopped state unless otherwise specified.

For refrigerant that cycles through the refrigerant circuit, it is desirable to use refrigerant having small global warming potential (GWP) from the viewpoint of global environmental protection. Refrigerant used in Embodiments is refrigerant having flammability and having greater average molecular weight than air. That is, refrigerant has greater density than air and is heavier than air under atmospheric pressure. Accordingly, the refrigerant has property of sinking downward in the direction of gravity in air.

For such refrigerant, specifically, it is possible to use a (mixed) refrigerant made of one or more refrigerants selected from a group including tetrafluoropropene (CF3CF = CH2: HFO-1234yf), difluoromethane (CH2F2: R32), propane (R290), propylene (R1270), ethane (R170), butane (R600), isobutane (R600a), 1.1.1.2-tetrafluoroethane (C2H2F4: R134a), pentafluoroethane (C2HF5: R125), and 1.3.3.3-tetrafluoro-1-propene (CF3-CH = CHF: HFO-1234ze), for example.

### [Refrigeration cycle action]

Next, the refrigeration cycle action in the refrigerant circuit will be described.

### (Cooling operation)

In the air-conditioning apparatus, during the cooling operation, refrigerant cycles through the compressor 21, the outdoor heat exchanger 23, the pressure reducing device 24, and the indoor heat exchanger 2 in that order. The indoor heat exchanger 2 serves as an evaporator, and the outdoor heat exchanger 23 serves as a condenser. Refrigerant in a two-phase gas-liquid state with a temperature lower than a room temperature flows through the indoor heat exchanger 2. Therefore, air passing through the indoor heat exchanger 2 in the fan unit 1 is cooled by refrigerant, and the cooled air is supplied to the respective rooms 30, so that the respective rooms 30 are cooled.

### (Heating operation)

In the air-conditioning apparatus, during the heating operation, refrigerant cycles through the compressor 21, the indoor heat exchanger 2, the pressure reducing device 24, and the outdoor heat exchanger 23 in that order. The indoor heat exchanger 2 serves as a condenser, and the outdoor heat exchanger 23 serves as an evaporator. Refrigerant in a two-phase gas-liquid state with a temperature higher than a room temperature flows through the indoor heat exchanger 2. Therefore, air passing through the indoor heat exchanger 2 in the fan unit 1 is heated by refrigerant, and the heated air is supplied to the respective rooms 30, so that the respective rooms 30 are heated.

### [Air conditioning and ventilation operation of air-conditioning apparatus]

The action of the air-conditioning apparatus during the air conditioning and ventilation operation will be described by taking the action during the cooling operation as an example. In the case where the rooms 30 are cooled, the refrigerant circuit performs the above-mentioned cooling operation. In the fan unit 1, the air supply damper 12 is opened, and the air-sending device 3 and the air return device 4 are operated. In the outside air passage 11A, outside air is taken into the housing 1a from the outside air port 6 due to the operation of the air-sending device 3. When the outside air taken into the housing 1a from the outside air port 6 passes through the total heat exchanger 5, the outside air exchanges heat with air passing through the exhaust air passage 11B. Warm outside air passing through the outside air passage 11A is caused to perform, in the total heat exchanger 5, total heat exchange with relatively cool air from the rooms 30 passing through the exhaust air passage 11B, thus being cooled, and the outside air is further cooled due to heat exchange with refrigerant in the indoor heat exchanger 2. Air that passes through the indoor heat exchanger 2 in the outside air passage 11A passes through the air-sending device 3 and the air supply port 7, is distributed through the air supply duct 13, and is supplied to the respective rooms 30 from the respective air outlets 13a. With such operations, the respective rooms 30 are cooled.

In contrast, in the exhaust air passage 11B, due to the operation of the air return device 4, air of the respective rooms 30 flows into the return air duct 14 from the respective air inlets 14a, passes through the return air duct 14, and flows into the exhaust air passage 11B from the return air port 8. The air that flows into the exhaust air passage 11B passes through the total heat exchanger 5, thus exchanging heat with air passing through the outside air passage 11A. Thereafter, the air passes through the air return device 4, and is exhausted to the outside.

In Embodiment 1, the air conditioning and ventilation operation where the air-conditioning apparatus performs the refrigeration cycle action has been described. However, as described above, the air-conditioning apparatus may also perform the ventilation operation in which the refrigeration cycle action is not performed. During the ventilation operation, as described above, it is sufficient to stop the operation of the compressor 21 is stopped and to operate the air-sending device 3 and the air return device 4.

During the operation of the air-conditioning apparatus, the air supply damper 12 is open as described above. In such a state, when leakage of refrigerant occurs in the housing 1a, such as when refrigerant leaks from the indoor heat exchanger 2 or from the refrigerant pipe 26 in the housing 1a, the leaked refrigerant reaches the rooms 30 via the air supply port 7. However, the refrigerant is stirred in each room 30 by an air flow generated by the air-sending device 3 and hence, the concentration of refrigerant in the room 30 does not become equal to or higher than flammable concentration whereby there is no possibility that a flammable region is formed in the room 30.

In contrast, during the stop of the air-conditioning apparatus, that is, during the stop of the air-sending device 3, the air supply damper 12 of the air-conditioning apparatus is closed. Therefore, in the air-conditioning apparatus, the flow of air from the outside air passage 11A to the rooms 30 is shut off. Accordingly, in the case where refrigerant leaks during the stop of the air-sending device 3, there is no possibility that refrigerant leaked in the fan unit 1 intrudes into the room 30. The leaked refrigerant flows through the outside air passage 11A in a direction opposite to a normal flow direction, and is discharged to the outside from the outside air port 6 that is open.

As described above, during the stop of the air-sending device 3, the air supply damper 12 is closed and hence, even in the case where refrigerant leaks during the stop of the air-sending device 3, the air-conditioning apparatus can suppress formation of a flammable region in the room 30 due to refrigerant. For the air supply damper 12, it is desirable to use a damper that is open during energization and is closed during non-energization. For such a damper, for example, it is sufficient to use a damper that is opened by driving a motor and that is closed by a spring when energization is stopped. With the use of such a damper, the air-conditioning apparatus can bring the air supply damper 12 into a closed state during power failure. Therefore, even if leakage of refrigerant occurs during power failure, it is possible to suppress formation of a flammable region in the room 30 due to refrigerant.

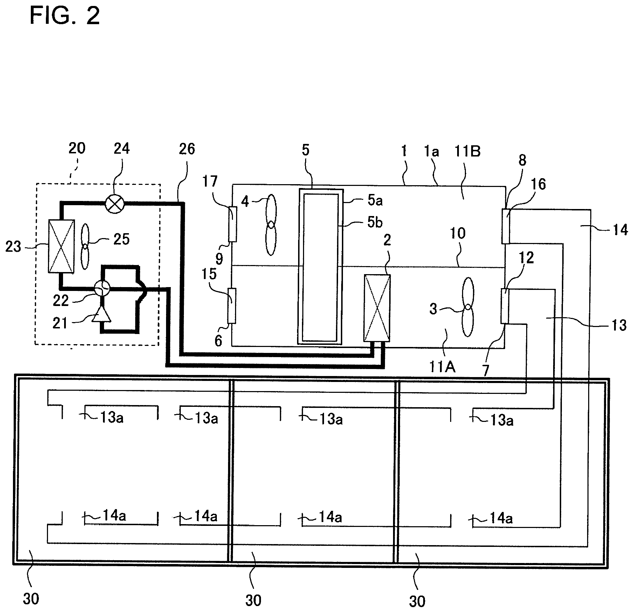

The air-conditioning apparatus is not limited to a structure shown in Fig. 1. As shown in Fig. 2, which will be described next, the air-conditioning apparatus may also have a configuration where a damper is provided to each of the outside air port 6, the return air port 8, and the exhaust port 9.

Fig. 2 is a schematic view showing a modification of the air-conditioning apparatus according to Embodiment 1, not making part of the present invention, but useful for its understanding.

In this modification, an outside air damper 15 is provided to the outside air port 6, a return air damper 16 is provided to the return air port 8, and an exhaust damper 17 is provided to the exhaust port 9. During the stop of the air-conditioning apparatus, the outside air damper 15 and the exhaust damper 17 are closed. The outside air port 6 and the exhaust port 9 communicate with the outside and hence, by closing the outside air port 6 and the exhaust port 9 by using the outside air damper 15 and the exhaust damper 17, the air-conditioning apparatus can prevent intrusion of insects, small animals, or the like into the housing 1a. Further, it is desirable to use the outside air damper 15 and the exhaust damper 17 that are opened by energization, and that are closed by stopping energization. With such a configuration, the outside air damper 15 and the exhaust damper 17 are brought into a closed state during power failure and hence, the air-conditioning apparatus can prevent intrusion of insects, small animals, or the like into the housing 1a during power failure.

The return air damper 16 is open during the operation of the air-conditioning apparatus, and is closed during the stop of the air-conditioning apparatus. With such a configuration, the following can be achieved. During the stop of the air-conditioning apparatus, the return air damper 16 is closed and hence, for example, it is possible to prevent a situation where leaked refrigerant from the indoor heat exchanger 2 in the outside air passage 11A flows into the exhaust air passage 11B via the total heat exchanger 5, and intrudes into the room 30 from the return air duct 14. Further, the air-conditioning apparatus uses, for the return air damper 16, a damper that is open during energization and that is closed during non-energization. Therefore, when leakage of refrigerant occurs during power failure, the return air damper 16 is brought into a closed state and hence, it is possible to suppress intrusion of leaked refrigerant into the room 30 during power failure. Opening and closing control of the outside air damper 15, the exhaust damper 17, and the return air damper 16 is performed by the controller not shown in the drawing. In general, even when the damper is closed, a slight gap is formed between the damper and an open port. By taking into account such a configuration, it is preferable to use, for each of the air supply damper 12 and the return air damper 16, a damper having a higher degree of airtightness in a closed state than the outside air damper 15 and the exhaust damper 17. With such a configuration, refrigerant leaked in the housing 1a can be easily discharged to the outside from a gap formed between the outside air damper 15 and the outside air port 6 or from a gap formed between the exhaust damper 17 and the exhaust port 9.

The air-conditioning apparatus uses, for the air supply damper 12, a damper having a higher degree of airtightness than the return air damper 16, in other words, the air-conditioning apparatus uses, for the air supply damper 12, a damper having the highest degree of airtightness among four dampers and hence, it is possible to suppress intrusion of refrigerant into the room 30 with more certainty. That is, since leakage of refrigerant occurs in the indoor heat exchanger 2, by closing, to a high degree of airtightness, the air supply port 7 communicating with the outside air passage 11A in which the indoor heat exchanger 2 is disposed, the air-conditioning apparatus can suppress intrusion of refrigerant into the room 30 with more certainty.

As has been described heretofore, the air-conditioning apparatus of Embodiment 1 includes the housing 1a having the outside air port 6, the air supply port 7, the return air port 8, and the exhaust port 9, the outside air port 6 taking outside air into the housing 1a, the air supply port 7 supplying the outside air taken into the housing 1a from the outside air port 6 to the rooms 30, the return air port 8 taking air into the housing 1a from the rooms 30, the exhaust port 9 exhausting the air taken into the housing 1a from the return air port 8 to the outside. The air-conditioning apparatus also includes the air supply duct 13, the outside air passage 11A, and the exhaust air passage 11B, the air supply duct 13 making the air supply port 7 and the rooms 30 communicate with each other, the outside air passage 11A being formed in the housing 1a to make the outside air port 6 and the air supply port 7 communicate with each other, the exhaust air passage 11B being formed in the housing 1a in a separated manner from the outside air passage 11A to make the return air port 8 and the exhaust port 9 communicate with each other. The air-conditioning apparatus also includes the air-sending device 3, the indoor heat exchanger 2, and the air supply damper 12. The air-sending device 3 is disposed in the outside air passage 11A, and is configured to generate an air flow directed toward the rooms 30 from the outside air port 6 via the air supply port 7 and the air supply duct 13. The indoor heat exchanger 2 is disposed in the outside air passage 11A, and refrigerant flows through the indoor heat exchanger 2. The air supply damper 12 is open during the operation of the air-sending device 3, and is closed during the stop of the air-sending device 3.

As described above, the air supply damper 12 is closed during the stop of the air-sending device 3 and hence, the air-conditioning apparatus can suppress formation of a flammable region in the room when the air-conditioning apparatus is in a stopped state.

The air-conditioning apparatus of Embodiment 1 also includes the return air duct 14, the return air damper 16, the outside air damper 15, the exhaust damper 17, and the air return device 4, the return air duct 14 making the return air port 8 and the rooms 30 communicate with each other, the return air damper 16 opening and closing the return air port 8, the outside air damper 15 opening and closing the outside air port 6, the exhaust damper 17 opening and closing the exhaust port 9, the air return device 4 being disposed in the exhaust air passage 11B to generate an air flow directed toward the exhaust port 9 from the rooms 30 via the return air duct 14 and the return air port 8. The return air damper 16, the outside air damper 15, and the exhaust damper 17 are closed during the stop of the air-sending device 3 and the air return device 4. As described above, the air-conditioning apparatus may have a configuration where each open port is provided with a damper. During the stop of the air-conditioning apparatus, the outside air damper 15 and the exhaust damper 17 that communicate with the outside are closed and hence, it is possible to prevent intrusion of insects, small animals, or the like into the housing 1a. Further, during the stop of the air-conditioning apparatus, the return air damper 16 is closed and hence, it is possible to prevent a situation where leaked refrigerant from the indoor heat exchanger 2 in the outside air passage 11A flows into the exhaust air passage 11B via the total heat exchanger 5, and intrudes into the room 30 from the return air duct 14.

The degree of airtightness of the air supply damper 12 and the degree of airtightness of the return air damper 16 are higher than the degree of airtightness of the outside air damper 15 and the exhaust damper 17.

With such a configuration, during the stop of the air-conditioning apparatus, refrigerant leaked in the housing 1a can be easily discharged to the outside from the gap formed between the outside air damper 15 and the outside air port 6 or the gap formed between the exhaust damper 17 and the exhaust port 9.

Further, the degree of airtightness of the air supply damper 12 is higher than the degree of airtightness of the return air damper 16.

With such a configuration, during the stop of the air-conditioning apparatus, it is possible to suppress intrusion of refrigerant, that is leaked in the housing 1a, into the room 30 from the air supply port 7.

### Embodiment 2.

Embodiment 2, according to the present invention, differs from Embodiment 1 in relation to the configuration of the housing 1a of the fan unit 1. Other components in Embodiment 2 are identical or equal to corresponding components in Embodiment 1. Hereinafter, components that make Embodiment 2 different from Embodiment 1 will be mainly described. Components that are not described in Embodiment 2 are substantially equal to the corresponding components in Embodiment 1.

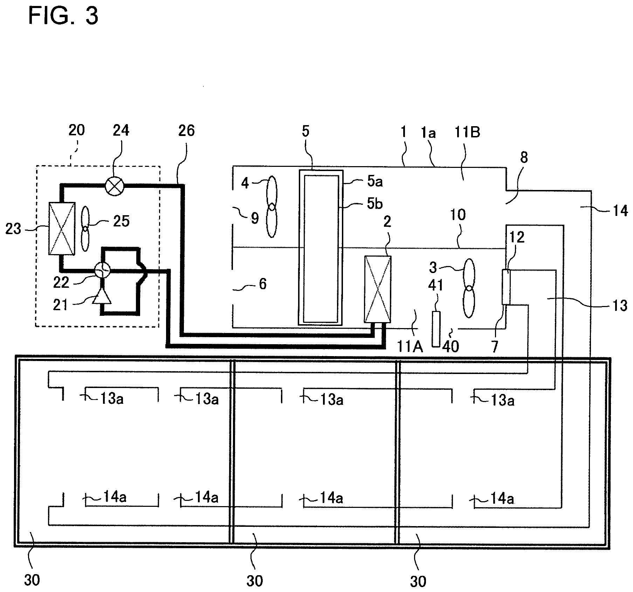

Fig. 3 is a schematic view showing the overall configuration of an air-conditioning apparatus according to Embodiment 2.

As shown in Fig. 3, in the air-conditioning apparatus according to Embodiment 2, the housing 1a has an open port 40 that causes the outside air passage 11A to be open to the outside, and the open port 40 is provided with an open port damper 41 that opens and closes the open port 40.

The open port damper 41 is closed during the operation of the air-conditioning apparatus, that is, during the operation of the air-sending device 3, and is open during the stop of the air-conditioning apparatus. That is, during the operation, the air supply damper 12 is open and the open port damper 41 is closed. During the stop, the air supply damper 12 is closed and the open port damper 41 is open. Opening and closing control of the air supply damper 12 and the open port damper 41 is performed by a controller not shown in the drawing. For the open port damper 41, it is desirable to use a damper that is closed during energization and that is open during non-energization. For such a damper, for example, it is sufficient to use a damper that is closed by driving a motor, and is opened by a spring when energization is stopped.

During the operation of the air-conditioning apparatus, the open port damper 41 is closed and hence, there is no possibility that air in the outside air passage 11A leaks to the outside from the open port 40. Therefore, during the operation of the air-conditioning apparatus, there is no influence due to the open port 40 being provided, and the air-conditioning apparatus exhibits an air-conditioning effect from a normal air conditioning and ventilation operation or a normal ventilation operation. In contrast, during the stop of the air-conditioning apparatus, the open port damper 41 is open, so that the inside and the outside of the fan unit 1 are made to communicate with each other via the open port 40. Therefore, in the case where leakage of refrigerant occurs in the housing 1a during the stop of the air-conditioning apparatus, the air-conditioning apparatus can discharge leaked refrigerant to the outside of the fan unit 1 from the open port 40.

The air supply damper 12 is closed during the stop of the air-conditioning apparatus and hence, in the case where leakage of refrigerant occurs in the housing 1a, there is no possibility of intrusion of refrigerant into the room 30 from the air supply port 7 via the air supply duct 13. However, as described above, even when the damper is closed, a slight gap is formed between the damper and the open port. In addition to the above, a gap may be formed between the damper and the open port due to deterioration of the damper over time or clogging of a foreign substance between the damper and the open port, for example. If such a gap is formed between the air supply damper 12 and the air supply port 7, even when the air supply damper 12 is closed, leaked refrigerant may intrude into the room 30 via the air supply port 7.

Embodiment 2 is a mode preferable for such a case. The open port 40 that is open during the stop of the operation is provided to the housing 1a and hence, refrigerant leaked in the housing 1a is discharged to the outside from the open port 40 in priority to the gap formed between the air supply damper 12 and the air supply port 7. With such a configuration, in the case where the above-mentioned gap is formed, it is possible to suppress a situation where leaked refrigerant intrudes into the room 30 through the gap, thus forming a flammable region. It is sufficient to form the open port 40 at a position that allows the outside air passage 11A to be open to the outside. However, from a viewpoint of exhausting leaked refrigerant from the open port 40 in priority to the gap formed between the air supply damper 12 and the air supply port 7, it is desirable to form the open port 40 at a position that is close to the air supply port 7 and that is close to the indoor heat exchanger 2 where leakage of refrigerant occurs. As such a desirable position, Fig. 3 shows an example where the open port 40 is provided to the bottom surface of the housing 1a at a position between the indoor heat exchanger 2 and the air supply port 7. By taking into account intrusion of rain, it is desirable to form the open port 40 in the bottom surface of the housing 1a as shown in Fig. 3. It is also desirable that the open port 40 is additionally provided with a net or the like for preventing intrusion of insects or small animals. The air-conditioning apparatus may also be configured such that, in the same manner as Embodiment 1, the outside air port 6 and the exhaust port 9 are respectively provided with the outside air damper 15 and the exhaust damper 17 that are closed during the stop of the operation to prevent intrusion of insects, small animals or the like from the outside air port 6 and the exhaust port 9. In the air-conditioning apparatus, the return air damper 16 may be provided to the return air port 8. In the case of the configuration where each of all four open ports is provided with a damper as described above, if no open port 40 is provided, there is a possibility that a flammable region is formed in the housing 1a when refrigerant leaks. However, in the air-conditioning apparatus of Embodiment 2, the open port 40 is provided and hence, it is possible to suppress formation of a flammable region in the housing 1a when refrigerant leaks.

As has been described heretofore, the air-conditioning apparatus of Embodiment 2 can obtain advantageous effects substantially equal to the advantageous effects of Embodiment 1. Further, the air-conditioning apparatus of Embodiment 2 includes the open port 40 that causes the outside air passage 11A to be open to the outside and the open port damper 41 that opens the open port 40 during the stop of the operation and hence, the following advantageous effects can be obtained. That is, in the case where leakage of refrigerant occurs in the housing 1a during the stop of the operation, the air-conditioning apparatus of Embodiment 2 can efficiently discharge the refrigerant to the outside of the housing 1a from the open port 40 and hence, it is possible to suppress formation of a flammable region in the room 30.

### Embodiment 3.

Embodiment 3, according to the present invention, differs from Embodiment 1 in relation to the configuration of the housing 1a of the fan unit 1. Other components in Embodiment 3 are identical or equal to corresponding components in Embodiment 1. Hereinafter, components that make Embodiment 3 different from Embodiment 1, will be mainly described. Components that are not described in Embodiment 3 are substantially equal to the corresponding components in Embodiment 1.

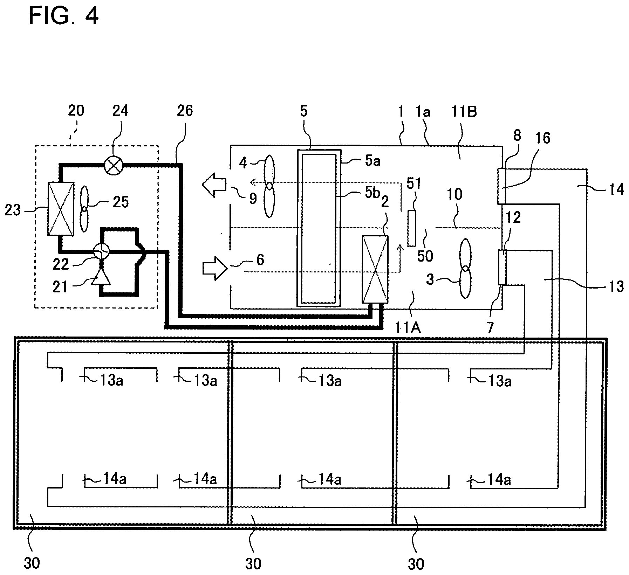

Fig. 4 is a schematic view showing the overall configuration of an air-conditioning apparatus according to Embodiment 3.

As shown in Fig. 4, in the air-conditioning apparatus according to Embodiment 3, the partition wall 10 in the housing 1a of the fan unit 1 has a communication port 50 that makes the outside air passage 11A and the exhaust air passage 11B communicate with each other, and the communication port 50 is provided with a penetrated damper 51 that opens and closes the communication port 50. The penetrated damper 51 is closed during the operation of the air-conditioning apparatus, that is, during the operation of the air-sending device 3, and is open during the stop of the air-conditioning apparatus. Opening and closing control of the penetrated damper 51 is performed by a controller not shown in the drawing. For the penetrated damper 51, it is desirable to use a damper that is closed during energization and that is open during non-energization. For such a damper, for example, it is sufficient to use a damper that is closed by driving a motor and that is opened by a spring when energization is stopped. The return air port 8 is provided with the return air damper 16 that opens and closes the return air port 8. During the operation of the air-conditioning apparatus, the air supply damper 12 and the return air damper 16 are open, and the penetrated damper 51 is close. During the stop of the air-conditioning apparatus, the air supply damper 12 and the return air damper 16 are closed, and the penetrated damper 51 is open. Further, during the stop of the air-conditioning apparatus, the operation of the air-sending device 3 is stopped, but the operation of the air return device 4 is continued.

The flow of air in the fan unit 1 during the operation of the air-conditioning apparatus is substantially equal to the flow of air in Embodiment 1 and, during the operation, the air-conditioning apparatus exhibits air-conditioning effect from a normal air conditioning and ventilation operation or a normal ventilation operation. During the stop of the air-conditioning apparatus, as described above, the penetrated damper 51 is open, the air-sending device 3 is stopped, and the operation of the air return device 4 is continued. The operation of the air return device 4 is continued and hence, an air flow shown by solid line arrows in Fig. 4 is generated in the fan unit 1. That is, the following air flow is generated. Outside air is taken into the outside air passage 11A in the housing 1a from the outside air port 6, and passes through the total heat exchanger 5 and the indoor heat exchanger 2. Thereafter, the outside air flows into the exhaust air passage 11B via the communication port 50, and passes through the total heat exchanger 5 and the air return device 4, and is then exhausted to the outside from the exhaust port 9. The air supply damper 12 and the return air damper 16 are closed and hence, there is no possibility that air is sent into the room 30.

Therefore, in the case where refrigerant leaks from the indoor heat exchanger 2 during the stop of the air-conditioning apparatus, due to the above-mentioned air flow in the fan unit 1, the refrigerant is diffused in the housing 1a and is discharged to the outside and hence, the refrigerant does not reach the room 30. Therefore, even if leakage of refrigerant occurs in the housing 1a during the stop of the operation of the air-conditioning apparatus, it is possible to suppress formation of a flammable region in the room 30 due to refrigerant.

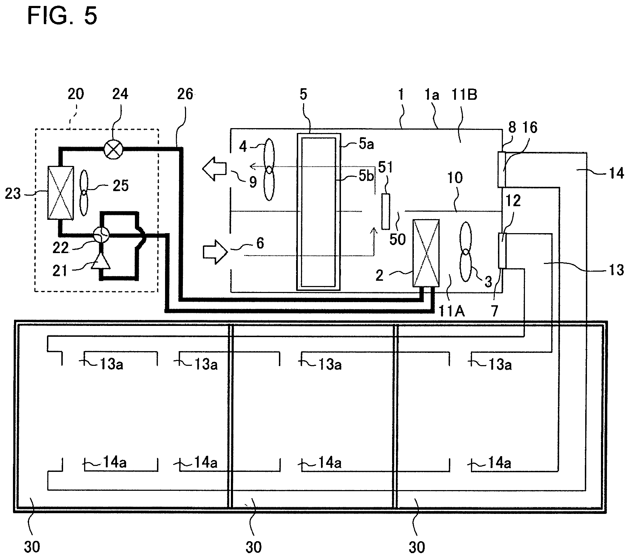

The position of the penetrated damper 51 is not limited to the position shown in Fig. 1, and may be a position shown in Fig. 5, which will be described next.

Fig. 5 is a schematic view showing a modification of the air-conditioning apparatus according to Embodiment 3.

In the modification, the communication port 50 and the penetrated damper 51 are provided on the upwind side of the indoor heat exchanger 2. With such a configuration, in the modification, during the stop of the operation, an air flow that is generated in the fan unit 1 due to the operation of the air return device 4 passes through the outside air port 6, the communication port 50, and the exhaust port 9. That is, in the modification, during the stop of the operation, the air flow that is generated in the fan unit 1 does not pass through the indoor heat exchanger 2 and hence, it is possible to suppress loss of flow rate due to pressure loss. Therefore, in the modification, for example, in the case where a refrigerant leaking portion is located on the upwind side of the indoor heat exchanger 2, leaked refrigerant can be efficiently stirred and exhausted and hence, it is possible to minimize formation of a flammable region in the room 30.

### INDUSTRIAL APPLICABILITY

The present invention can be used for an air-conditioning apparatus that conditions air of a target room by using ducts.

### REFERENCE SIGNS LIST

1: fan unit,
1a: housing,
2: indoor heat exchanger,
3: air-sending device,
4: air return device,
5: total heat exchanger,
5a: casing,
5b: honeycomb rotor,
6: outside air port,
7: air supply port,
8: return air port,
9: exhaust port,
10: partition wall,
11A: outside air passage,
11B: exhaust air passage,
12: air supply damper,
13: air supply duct,
13a: air outlet,
14: return air duct,
14a: air inlet,
15: outside air damper,
16: return air damper,
17: exhaust damper,
20: outdoor unit,
21: compressor,
22: four-way valve,
23: outdoor heat exchanger,
24: pressure reducing device,
25: outdoor air-sending device,
26: refrigerant pipe,
30: room,
40: open port,
41: open port damper,
50: communication port,
51: penetrated damper.

## Claims

1. An air-conditioning apparatus configured to supply conditioned air to a room (30) through an air supply duct (13) by operating an air-sending device (3), the air-conditioning apparatus comprising:
a housing (1a) having an outside air port (6), an air supply port (7) , a return air port (8), and an exhaust port (9), the outside air port (6) adapted for taking outside air into the housing (1a), the air supply port (7) adapted for supplying the outside air taken into the housing (1a)from the outside air port (6) to the room (30), the air supply duct (13) being connected to the air supply port (7), the return air port (8) adapted for taking air into the housing (1a) from the room (30), the exhaust port (9) adapted for exhausting the air taken into the housing (1a) from the return air port (8) to an outside;
an outside air passage (11A) formed in the housing (1a) configured to make the outside air port (6) and the air supply port (7) communicate with each other;
an exhaust air passage (11B) formed in the housing (1a) in a separated manner from the outside air passage (11A) configured to make the return air port (8) and the exhaust port (9) communicate with each other;
an indoor heat exchanger (2) disposed in the outside air passage (11A), comprising a refrigerant adapted for flowing through the indoor heat exchanger (2);
the air-sending device (3) disposed in the outside air passage (11A), and configured to generate an air flow directed toward the room (30) from the outside air port (6) via the air supply port (7) and the air supply duct (13) during operation; and
an air supply damper (12) configured to open and close the air supply port (13), the air supply damper (12) being configured to be open during the operation of the air-sending device (3) and being configured to be closed during a stop of the air-sending device (3) the air-conditioning apparatus being **characterised by** comprising an open port (40) formed in the housing (1a) configured to cause the outside air passage to be open to the outside; and
an open port damper (41) configured to open and close the open port (40), wherein
the open port damper (41) is configured to be closed during the operation of the air-sending device (3), and is configured to be open during the stop of the air-sending device (3).

2. The air-conditioning apparatus of claim 1, comprising:
a return air duct (14) configured to make the return air port (8) and the room (30) communicate with each other;
a return air damper (16) configured to open and close the return air port (8);
an outside air damper (15) configured to open and close the outside air port (6);
an exhaust damper (17) configured to open and close the exhaust port (9); and
an air return device (4) disposed in the exhaust air passage (11B), and
configured to generate an air flow directed toward the exhaust port (9) from the room (30) via the return air duct (14) and the return air port (8), wherein
the return air damper (16), the outside air damper (15), and the exhaust damper (17) are configured to be closed during the stop of the air-sending device (3) and the air return device (4).

3. The air-conditioning apparatus of claim 2, wherein a degree of airtightness of the air supply damper (12) and a degree of airtightness of the return air damper (16) are higher than a degree of airtightness of the outside air damper (15) and a degree of airtightness of the exhaust damper (17).

4. The air-conditioning apparatus of any one of claims 2 or 3, wherein the degree of airtightness of the air supply damper (12) is higher than the degree of airtightness of the return air damper (16).

5. The air-conditioning apparatus of any one of claims 1 to 4, wherein the air supply damper (12) is configured to be open during energization, and is configured to be closed during non-energization.

6. The air-conditioning apparatus of any one of claim 1 and claims 2 to 5 as dependent on claim 1, wherein the open port damper (41) is configured to be closed during energization, and is configured to be open during non-energization.

7. The air-conditioning apparatus of any one of claims 2 to 5, wherein the return air damper (16) is configured to be open during energization, and is configured to be closed during non-energization.

8. The air-conditioning apparatus of any one of claims 1 to 7, wherein the air supply duct (13) is adapted to extend toward a plurality of the rooms (30), and configured to blow the conditioned air toward each of the plurality of the rooms (30) from air outlets (13a) respectively provided to the plurality of the rooms (30).

9. The air-conditioning apparatus of any one of claims 1 to 8, comprising a total heat exchanger (5) configured to perform heat exchange between the outside air taken into the housing (1a) from the outside air port and the air of the room taken into the housing (1a) from the return air port.

10. An air-conditioning apparatus configured to supply conditioned air to a room (30) through an air supply duct (13) by operating an air-sending device (3), the air-conditioning apparatus comprising:
a housing (1a) having an outside air port (6), an air supply port (7), a return air port (8), and an exhaust port (9), the outside air port (6) adapted for taking outside air into the housing (1a), the air supply port (7) adapted for supplying the outside air taken into the housing (1a)from the outside air port (6) to the room (30), the air supply duct (13) being connected to the air supply port (7), the return air port (8) adapted for taking air into the housing (1a) from the room (30), the exhaust port (9) adapted for exhausting the air taken into the housing (1a) from the return air port (8) to an outside;
an outside air passage (11A) formed in the housing (1a) configured to make the outside air port (6) and the air supply port (7) communicate with each other;
an exhaust air passage (11B) formed in the housing (1a) in a separated manner from the outside air passage (11A) to make the return air port (8) and the exhaust port (9) communicate with each other;
an indoor heat exchanger (2) disposed in the outside air passage (11A), comprising a refrigerant adapted for flowing through the indoor heat exchanger (2);
the air-sending device (3) disposed in the outside air passage (11A), and configured to generate an air flow directed toward the room (30) from the outside air port (6) via the air supply port (7) and the air supply duct (13) during operation; and
an air supply damper (12) configured to open and close the air supply port (13), the air supply damper (12) being open during the operation of the air-sending device (3) and being closed during a stop of the air-sending device (3);
a return air duct (14) configured to make the return air port (8) and the room (30) communicate with each other;
a return air damper (16) configured to open and close the return air port (8);
an air return device (4) disposed in the exhaust air passage (11B), and
configured to generate an air flow directed toward the exhaust port (9) from the room (30) via the return air duct (14) and the return air port (8);
the air-conditioning apparatus being **characterised by** further comprising a partition wall (10) configured to divide an inside of the housing (1a) into the outside air passage (11A) and the exhaust air passage (11B);
a communication port (50) formed in the partition wall (10) and adapted to make the outside air passage (11A) and the exhaust air passage (11B) communicate with each other; and
a penetrated damper (51) configured to open and close the communication port (50), wherein
the penetrated damper (51) is configured to be open and the air supply damper (12) and the return air damper (16) are configured to be closed during the stop of the air-sending device (3),
and an air flow is generated with operation of the air return device (4), the air flow flowing from the outside air port (6) and being exhausted from the exhaust port (9) via the communication port (50).

11. The air-conditioning apparatus of claim 10, wherein the communication port (50) is formed on an upwind side of the indoor heat exchanger (2).

12. The air-conditioning apparatus of claim 10, wherein the penetrated damper (51) is configured to be closed during energization, and is configured to be open during non-energization.

## Patentansprüche

1. Klimagerät, das konfiguriert ist, um einem Raum (30) durch einen Luftzufuhrkanal (13) durch Betreiben einer Luftsendevorrichtung (3) klimatisierte Luft zuzuführen, wobei das Klimagerät Folgendes umfasst:
ein Gehäuse (1a) mit einer Außenluftöffnung (6), einer Luftzufuhröffnung (7), einer Rückluftöffnung (8) und einer Auslassöffnung (9), wobei die Außenluftöffnung (6) zum Ansaugen von Außenluft in das Gehäuse (1a) angepasst ist, die Luftzufuhröffnung (7) zum Zuführen der in das Gehäuse (1a) von der Außenluftöffnung (6) angesaugten Außenluft zu dem Raum (30) angepasst ist, der Luftzufuhrkanal (13) mit der Luftzufuhröffnung (7) verbunden ist, die Rückluftöffnung (8) zum Ansaugen von Luft aus dem Raum (30) in das Gehäuse (1a) angepasst ist, die Auslassöffnung (9) zum Abführen der in das Gehäuse (1a) von der Rückluftöffnung (8) angesaugte Luft nach außen angepasst ist;
einen Außenluftdurchlass (11A), der in dem Gehäuse (1a) ausgebildet ist und dazu konfiguriert ist, die Außenluftöffnung (6) und die Luftzufuhröffnung (7) miteinander in Kommunikation zu bringen;
einen Abluftdurchlass (11B), der in dem Gehäuse (1a) getrennt von dem Außenluftdurchlass (11A) ausgebildet ist und dazu konfiguriert ist, die Rückluftöffnung (8) und die Auslassöffnung (9) miteinander in Kommunikation zu bringen;
einen Innenwärmetauscher (2), der in dem Außenluftdurchlass (11A) angeordnet ist und ein Kältemittel umfasst, das zum Strömen durch den Innenwärmetauscher (2) angepasst ist;
die Luftsendevorrichtung (3), die in dem Außenluftdurchlass (11A) angeordnet und dazu konfiguriert ist, während des Betriebs einen Luftstrom zu erzeugen, der von der Außenluftöffnung (6) über die Luftzufuhröffnung (7) und den Luftzufuhrkanal (13) zu dem Raum (30) gerichtet ist; und
eine Luftzufuhrklappe (12), die dazu konfiguriert ist, die Luftzufuhröffnung (13) zu öffnen und zu schließen, wobei die Luftzufuhrklappe (12) dazu konfiguriert ist, während des Betriebs der Luftsendevorrichtung (3) offen zu sein, und dazu konfiguriert ist, während eines Stopps der Luftsendevorrichtung (3) geschlossen zu sein;
wobei das Klimagerät **dadurch gekennzeichnet ist, dass** es Folgendes umfasst
eine offene Öffnung (40), die in dem Gehäuse (1a) ausgebildet ist und dazu konfiguriert ist, zu bewirken, dass der Außenluftdurchlass nach außen offen ist; und
eine offene Öffnungsklappe (41), die konfiguriert ist, um die offene Öffnung (40) zu öffnen und zu schließen, wobei
die offene Öffnungsklappe (41) so konfiguriert ist, dass sie während des Betriebs der Luftsendevorrichtung (3) geschlossen ist, und so konfiguriert ist, dass sie während des Stopps der Luftsendevorrichtung (3) geöffnet ist.

2. Klimagerät nach Anspruch 1, umfassend:
einen Rückluftkanal (14), der dazu konfiguriert ist, die Rückluftöffnung (8) und den Raum (30) miteinander in Kommunikation zu bringen;
eine Rückluftklappe (16), die konfiguriert ist, um die Rückluftöffnung (8) zu öffnen und zu schließen;
eine Außenluftklappe (15), die konfiguriert ist, um die Außenluftöffnung (6) zu öffnen und zu schließen;
eine Auslassklappe (17), die konfiguriert ist, um die Auslassöffnung (9) zu öffnen und zu schließen; und
eine Luftrückführvorrichtung (4), die in dem Abluftdurchlass (11B) angeordnet und so konfiguriert ist, dass sie einen Luftstrom erzeugt, der von dem Raum (30) über den Rückluftkanal (14) und die Rückluftöffnung (8) zu der Auslassöffnung (9) gerichtet ist, wobei
die Rückluftklappe (16), die Außenluftklappe (15) und die Auslassklappe (17) so konfiguriert sind, dass sie während des Stopps der Luftsendevorrichtung (3) und der Luftrückführvorrichtung (4) geschlossen sind.

3. Klimagerät nach Anspruch 2, wobei ein Grad der Luftdichtigkeit der Luftzufuhrklappe (12) und ein Grad der Luftdichtigkeit der Rückluftklappe (16) höher sind als ein Grad der Luftdichtigkeit der Außenluftklappe (15) und ein Grad der Luftdichtigkeit der Auslassklappe (17).

4. Klimagerät nach einem der Ansprüche 2 oder 3, wobei der Grad der Luftdichtigkeit der Luftzufuhrklappe (12) höher ist als der Grad der Luftdichtigkeit der Rückluftklappe (16).

5. Klimagerät nach einem der Ansprüche 1 bis 4, wobei die Luftzufuhrklappe (12) dazu konfiguriert ist, während der Bestromung offen zu sein, und dazu konfiguriert ist, während der Nichtbestromung geschlossen zu sein.

6. Klimagerät nach einem der Ansprüche 1 und 2 bis 5 in Abhängigkeit von Anspruch 1, wobei die offene Öffnungsklappe (41) dazu konfiguriert ist, während der Bestromung geschlossen zu sein, und dazu konfiguriert ist, während der Nichtbestromung offen zu sein.

7. Klimagerät nach einem der Ansprüche 2 bis 5, wobei die Rückluftklappe (16) dazu konfiguriert ist, während der Bestromung offen zu sein, und dazu konfiguriert ist, während der Nichtbestromung geschlossen zu sein.

8. Klimagerät nach einem der Ansprüche 1 bis 7, wobei der Luftzufuhrkanal (13) angepasst ist, um sich zu einer Vielzahl der Räume (30) zu erstrecken, und konfiguriert ist, um die klimatisierte Luft zu jedem der Vielzahl der Räume (30) von Luftauslässen (13a) her, die jeweils für die Vielzahl der Räume (30) bereitgestellt sind, zu blasen.

9. Klimagerät nach einem der Ansprüche 1 bis 8, umfassend einen Gesamtwärmetauscher (5), der konfiguriert ist, um einen Wärmeaustausch zwischen der Außenluft, die von der Außenluftöffnung in das Gehäuse (1a) angesaugt wird, und der Luft des Raums, die von der Rückluftöffnung in das Gehäuse (1a) angesaugt wird, durchzuführen.

10. Klimagerät, das konfiguriert ist, um einem Raum (30) durch einen Luftzufuhrkanal (13) durch Betreiben einer Luftsendevorrichtung (3) klimatisierte Luft zuzuführen, wobei das Klimagerät Folgendes umfasst:
ein Gehäuse (1a) mit einer Außenluftöffnung (6), einer Luftzufuhröffnung (7), einer Rückluftöffnung (8) und einer Auslassöffnung (9), wobei die Außenluftöffnung (6) zum Ansaugen von Außenluft in das Gehäuse (1a) angepasst ist, die Luftzufuhröffnung (7) zum Zuführen der in das Gehäuse (1a) von der Außenluftöffnung (6) angesaugten Außenluft zu dem Raum (30) angepasst ist, der Luftzufuhrkanal (13) mit der Luftzufuhröffnung (7) verbunden ist, die Rückluftöffnung (8) zum Ansaugen von Luft aus dem Raum (30) in das Gehäuse (1a) angepasst ist, die Auslassöffnung (9) zum Abführen der in das Gehäuse (1a) von der Rückluftöffnung (8) angesaugte Luft nach außen angepasst ist;
einen Außenluftdurchlass (11A), der in dem Gehäuse (1a) ausgebildet ist und dazu konfiguriert ist, die Außenluftöffnung (6) und die Luftzufuhröffnung (7) miteinander in Kommunikation zu bringen;
einen Abluftdurchlass (11B), der in dem Gehäuse (1a) getrennt von dem Außenluftdurchlass (11A) ausgebildet ist, um die Rückluftöffnung (8) und die Auslassöffnung (9) miteinander in Kommunikation zu bringen;
einen Innenwärmetauscher (2), der in dem Außenluftdurchlass (11A) angeordnet ist und ein Kältemittel umfasst, das zum Strömen durch den Innenwärmetauscher (2) angepasst ist;
die Luftsendevorrichtung (3), die in dem Außenluftdurchlass (11A) angeordnet und dazu konfiguriert ist, während des Betriebs einen Luftstrom zu erzeugen, der von der Außenluftöffnung (6) über die Luftzufuhröffnung (7) und den Luftzufuhrkanal (13) zu dem Raum (30) gerichtet ist; und
eine Luftzufuhrklappe (12), die dazu konfiguriert ist, die Luftzufuhröffnung (13) zu öffnen und zu schließen, wobei die Luftzufuhrklappe (12) während des Betriebs der Luftsendevorrichtung (3) offen ist, und während eines Stopps der Luftsendevorrichtung (3) geschlossen ist;
einen Rückluftkanal (14), der dazu konfiguriert ist, die Rückluftöffnung (8) und den Raum (30) miteinander in Kommunikation zu bringen;
eine Rückluftklappe (16), die konfiguriert ist, um die Rückluftöffnung (8) zu öffnen und zu schließen;
eine Luftrückführvorrichtung (4), die in dem Abluftdurchlass (11B) angeordnet und so konfiguriert ist, dass sie einen Luftstrom erzeugt, der von dem Raum (30) über den Rückluftkanal (14) und die Rückluftöffnung (8) zu der Auslassöffnung (9) gerichtet ist;
wobei das Klimagerät **dadurch gekennzeichnet ist, dass** es ferner Folgendes umfasst
eine Trennwand (10), die dazu konfiguriert ist, ein Inneres des Gehäuses (1a) in den Außenluftdurchlass (11A) und den Abluftdurchlass (11B) zu unterteilen;
eine Kommunikationsöffnung (50), die in der Trennwand (10) ausgebildet und dazu ausgelegt ist, den Außenluftdurchlass (11A) und den Abluftdurchlass (11B) miteinander in Kommunikation zu bringen; und
eine durchdrungene Klappe (51), die dazu konfiguriert ist, die Kommunikationsöffnung (50) zu öffnen und zu schließen, wobei die durchdrungene Klappe (51) dazu konfiguriert ist, offen zu sein, und die Luftzufuhrklappe (12) und die Rückluftklappe (16) dazu konfiguriert sind, während des Stopps der Luftsendevorrichtung (3) geschlossen zu sein, und ein Luftstrom beim Betrieb der Luftrückführvorrichtung (4) erzeugt wird, wobei der Luftstrom von der Außenluftöffnung (6) strömt und von der Auslassöffnung (9) über die Kommunikationsöffnung (50) abgeführt wird.

11. Klimagerät nach Anspruch 10, wobei die Kommunikationsöffnung (50) auf einer Aufwindseite des Innenwärmetauschers (2) ausgebildet ist.

12. Klimagerät nach Anspruch 10, wobei die durchdrungene Klappe (51) dazu konfiguriert ist, während der Bestromung geschlossen zu sein, und dazu konfiguriert ist, während der Nichtbestromung offen zu sein.

## Revendications

1. Appareil de climatisation configuré pour fournir de l'air conditionné à une pièce (30) via un conduit d'alimentation en air (13) en faisant fonctionner un dispositif d'envoi d'air (3), l'appareil de climatisation comprenant :
un logement (1a) ayant un orifice d'air extérieur (6), un orifice d'alimentation en air (7), un orifice d'air de reprise (8), et un orifice d'évacuation (9), l'orifice d'air extérieur (6) étant conçu pour aspirer l'air extérieur dans le logement (1a), l'orifice d'alimentation en air (7) étant conçu pour alimenter la pièce (30) avec l'air extérieur aspiré dans le logement (1a) à partir de l'orifice d'air extérieur (6), le conduit d'alimentation en air (13) étant relié à l'orifice d'alimentation en air (7), l'orifice d'air de reprise (8) étant conçu pour aspirer l'air dans le logement (1a) depuis la pièce (30), l'orifice d'évacuation (9) étant conçu pour évacuer l'air aspiré dans le logement (1a) depuis l'orifice d'air de reprise (8) vers un extérieur ;
un passage d'air extérieur (11A) formé dans le logement (1a) configuré pour faire en sorte que l'orifice d'air extérieur (6) et l'orifice d'alimentation en air (7) communiquent l'un avec l'autre ;
un passage d'air d'évacuation (11B) formé dans le logement (1a) de manière séparée du passage d'air extérieur (11A) configuré pour faire en sorte que l'orifice d'air de reprise (8) et l'orifice d'évacuation (9) communiquent l'un avec l'autre ;
un échangeur de chaleur intérieur (2) disposé dans le passage d'air extérieur (11A), comprenant un réfrigérant conçu pour s'écouler à travers dans l'échangeur de chaleur intérieur (2) ;
le dispositif d'envoi d'air (3) disposé dans le passage d'air extérieur (11A) et configuré pour générer un écoulement d'air dirigé vers la pièce (30) à partir de l'orifice d'air extérieur (6) via l'orifice d'alimentation en air (7) et le conduit d'alimentation en air (13) pendant le fonctionnement; et
un clapet d'alimentation en air (12) configuré pour ouvrir et fermer l'orifice d'alimentation en air (13), le clapet d'alimentation en air (12) étant configuré pour être ouvert pendant le fonctionnement du dispositif d'envoi d'air (3), et étant configuré pour être fermé pendant l'arrêt du dispositif d'envoi d'air (3) ;
l'appareil de climatisation est **caractérisé par le fait qu'**il comprend
un orifice ouvert (40) formé dans le logement (1a) configuré pour permettre au passage d'air extérieur d'être ouvert vers l'extérieur ; et
un clapet d'ouverture (41) configuré pour ouvrir et fermer l'orifice ouvert (40), dans lequel
le clapet ouvert (41) est configuré pour être fermé pendant le fonctionnement du dispositif d'envoi d'air (3), - et est configuré pour être ouvert pendant l'arrêt du dispositif d'envoi d'air (3).

2. Appareil de climatisation de la revendication 1, comprenant :
un conduit d'air de reprise (14) configuré pour faire en sorte que l'orifice d'air de reprise (8) et la pièce (30) communiquent l'un avec l'autre ;
un clapet d'air de reprise (16) configuré pour ouvrir et fermer l'orifice d'air de reprise (8) ;
un clapet d'air extérieur (15) configuré pour ouvrir et fermer l'orifice d'air extérieur (6) ;
un clapet d'évacuation (17) configuré pour ouvrir et fermer l'orifice d'évacuation (9) ; et
un dispositif de reprise d'air (4) disposé dans le passage d'évacuation d'air (11B) et configuré pour générer un écoulement d'air dirigé vers l'orifice d'évacuation (9) à partir de la pièce (30) via le conduit d'air de reprise (14) et l'orifice d'air de reprise (8), dans lequel
le clapet d'air de reprise (16), le clapet d'air extérieur (15), et le clapet d'évacuation (17) sont configurés pour être fermés pendant l'arrêt du dispositif d'envoi d'air (3) et du dispositif de reprise d'air (4).

3. Appareil de climatisation de la revendication 2, dans lequel un degré d'étanchéité du clapet d'alimentation en air (12) et un degré d'étanchéité du clapet d'air de reprise (16) sont supérieurs à un degré d'étanchéité du clapet d'air extérieur (15) et à un degré d'étanchéité du clapet d'évacuation (17).

4. Appareil de climatisation de l'une des revendications 2 ou 3, dans lequel le degré d'étanchéité du clapet d'alimentation en air (12) est supérieur au degré d'étanchéité du clapet d'air de reprise (16).

5. Appareil de climatisation de l'une des revendications 1 à 4, dans lequel le clapet d'alimentation en air (12) est configuré pour être ouvert pendant l'excitation, et est configuré pour être fermé pendant la non excitation.

6. Appareil de climatisation de l'une des revendications 1 et des revendications 2 à 5 en fonction de la revendication 1, dans lequel le clapet à orifice ouvert (41) est configuré pour être fermé pendant l'excitation, et est configuré pour être ouvert pendant la non excitation.

7. Appareil de climatisation de l'une des revendications 2 à 5, dans lequel le clapet d'air de reprise (16) est configuré pour être ouvert pendant l'excitation, et est configuré pour être fermé pendant la non excitation.

8. Appareil de climatisation de l'une des revendications 1 à 7, dans lequel le conduit d'alimentation en air (13) est conçu pour s'étendre vers une pluralité de pièces (30), et configuré pour souffler l'air conditionné vers chacune de la pluralité de pièces (30) à partir de sorties d'air (13a) respectivement fournies à la pluralité de pièces (30).

9. Appareil de climatisation de l'une des revendications 1 à 8, comprenant un échangeur de chaleur total (5) configuré pour effectuer un échange de chaleur entre l'air extérieur introduit dans le logement (1a) à partir de l'orifice d'air extérieur et l'air de la pièce introduit dans le logement (1a) à partir de l'orifice d'air de reprise.

10. Appareil de climatisation configuré pour fournir de l'air conditionné à une pièce (30) via un conduit d'alimentation en air (13) en actionnant un dispositif d'envoi d'air (3), l'appareil de climatisation comprenant :
un logement (1a) ayant un orifice d'air extérieur (6), un orifice d'alimentation en air (7), un orifice d'air de reprise (8), et un orifice d'évacuation (9), l'orifice d'air extérieur (6) étant conçu pour aspirer l'air extérieur dans le logement (1a), l'orifice d'alimentation en air (7) étant conçu pour alimenter la pièce (30) avec l'air extérieur aspiré dans le logement (1a) à partir de l'orifice d'air extérieur (6), le conduit d'alimentation en air (13) étant relié à l'orifice d'alimentation en air (7), l'orifice d'air de reprise (8) étant conçu pour aspirer l'air dans le logement (1a) depuis la pièce (30), l'orifice d'évacuation (9) étant conçu pour évacuer l'air aspiré dans le logement (1a) depuis l'orifice d'air de reprise (8) vers un extérieur ;
un passage d'air extérieur (11A) formé dans le logement (1a) configuré pour faire en sorte que l'orifice d'air extérieur (6) et l'orifice d'alimentation en air (7) communiquent l'un avec l'autre ;
un passage d'air d'évacuation (11B) formé dans le logement (1a) de manière séparée du passage d'air extérieur (11A) pour faire en sorte que l'orifice d'air de reprise (8) et l'orifice d'évacuation (9) communiquent l'un avec l'autre ;
un échangeur de chaleur intérieur (2) disposé dans le passage d'air extérieur (11A), comprenant un réfrigérant conçu pour s'écouler à travers dans l'échangeur de chaleur intérieur (2) ;
le dispositif d'envoi d'air (3) disposé dans le passage d'air extérieur (11A) et configuré pour générer un écoulement d'air dirigé vers la pièce (30) à partir de l'orifice d'air extérieur (6) via l'orifice d'alimentation en air (7) et le conduit d'alimentation en air (13) pendant le fonctionnement; et
un clapet d'alimentation en air (12) configuré pour ouvrir et fermer l'orifice d'alimentation en air (13), le clapet d'alimentation en air (12) étant ouvert pendant le fonctionnement du dispositif d'envoi d'air (3) et étant fermé pendant l'arrêt du dispositif d'envoi d'air (3) ;
un conduit d'air de reprise (14) configuré pour faire en sorte que l'orifice d'air de reprise (8) et la pièce (30) communiquent l'un avec l'autre ;
un clapet d'air de reprise (16) configuré pour ouvrir et fermer l'orifice d'air de reprise (8) ;
un dispositif de reprise d'air (4) disposé dans le passage d'évacuation d'air (11B) et configuré pour générer un écoulement d'air dirigé vers l'orifice d'évacuation (9) à partir de la pièce (30) via le conduit d'air de reprise (14) et l'orifice d'air de reprise (8) ;
l'appareil de climatisation est **caractérisé par le fait qu'**il comprend en outre
une paroi de séparation (10) configurée pour diviser l'intérieur du logement (1a) en un passage d'air extérieur (11A) et un passage d'air d'évacuation (11B) ;
un orifice de communication (50) formé dans la paroi de séparation (10) et conçu pour faire en sorte que le passage d'air extérieur (11A) et le passage d'air d'évacuation (11B) communiquent l'un avec l'autre ; et
un clapet pénétré (51) configuré pour ouvrir et fermer le port de communication (50), dans lequel le clapet pénétré (51) est configuré pour être ouvert et le clapet d'alimentation en air (12) et le clapet d'air de reprise (16) sont configurés pour être fermés pendant l'arrêt du dispositif d'envoi d'air (3), et un écoulement d'air est généré avec le fonctionnement du dispositif de reprise d'air (4), le écoulement d'air s'écoulant de l'orifice d'air extérieur (6) et étant évacué par l'orifice d'évacuation (9) via le port de communication (50).

11. Appareil de climatisation de la revendication 10, dans lequel le port de communication (50) est formé sur un côté au vent de l'échangeur de chaleur intérieur (2).

12. Appareil de climatisation de la revendication 10, dans lequel l'amortisseur pénétré (51) est configuré pour être fermé pendant l'excitation, et est configuré pour être ouvert pendant la non excitation.
